# EUROPÄISCHE PATENTSCHRIFT

(11) **EP 1 256 815 B1**
(45) Veröffentlichungstag und Bekanntmachung des Hinweises auf die Patenterteilung: **28.09.2005**
(21) Anmeldenummer: 02004456.6
(22) Anmeldetag: 27.02.2002
(51) Int. Cl.: G01S 15/93

(54) **Abstandswarngerät für Kraftfahrzeuge und Betriebsverfahren**
Distance warning device for motor vehicles and operating method
Dispositif d'avertissement de distance pour véhicules automobiles et procédé de fonctionnement

(30) Priorität: 09.05.2001 DE 10122388
(43) Veröffentlichungstag der Anmeldung: 13.11.2002
(73) Patentinhaber: Valeo Schalter und Sensoren GmbH, 74321 Bietigheim-Bissingen (DE)
(72) Erfinder: Garcia, Cecilia, 74321 Bietigheim-Bissingen (DE)
(74) Vertreter: Dreiss, Fuhlendorf, Steimle & Becker

(56) Entgegenhaltungen:
- DE-A- 19 641 493
- DE-A- 19 801 205
- DE-A- 19 859 712
- DE-A- 19 909 811
- FR-A- 2 778 155

## Beschreibung

Die Erfindung betrifft ein Abstandswarngerät für Kraftfahrzeuge mit den Merkmalen des Oberbegriffs des Anspruchs 1.

Abstandswarngeräte der eingangs genannten Art sind z.B. aus der DE-A-39 37 585 bekannt und setzen vorwiegend Ultraschall- oder auch Radarsensoren zur Detektion von Hindernissen ein, wodurch der Abstand zwischen Fahrzeug und Hindernis bestimmt und in Abhängigkeit von diesem Abstand beispielsweise die Intensität des akustischen Warnsignals variiert werden kann. Ferner sind Systeme bekannt, die ein akustisches Warnsignal abgeben, dessen Frequenz proportional zu dem Abstand ist.

Besonders nachteilig an diesen akustischen Warnsignalen ist deren geringe Unterscheidungskraft zu akustischen Signalen anderer elektronischer Geräte. Zwar ist der Frequenzbereich solcher Warnsignale häufig auf die größte Empfindlichkeit des menschlichen Gehörs bei etwa 1 kHz abgestimmt, bei einer Mehrzahl gleichzeitig auftretender akustischer Warnsignale jedoch ist die Signalwirkung mangels Unterscheidbarkeit der einzelnen Signale stark beeinträchtigt.

Ein weiterer Nachteil bekannter Systeme besteht darin, dass der Benutzer die Lautstärke des akustischen Warnsignals nicht einstellen kann. Besonders bei Cabriolets, aber auch bei Limousinen mit geöffnetem Fenster und Nutzfahrzeugen besteht daher im Stadtverkehr oder ähnlich lauten Umgebungen die Gefahr, das Warnsignal zu überhören.

Aus der DE-A-198 01 205 ist eine Akustische Warneinrichtung bekannt, bei der der Abstand zu einem Hindernis in bestimmen Schritten über eins Sprachausgabe ausgegeben oder numerisch auf einer Anzeigevorrichtung angegeben werden kann. Aus der DE-A-198 59 712 ist ein Simulator bekannt, mit der Betätigungsgeräusche von Bauteilen eines Fahrzeugs, z.B. das Anziehen oder Lösen einer Feststellbremse simuliert werden kann. Dabei weist diese Vorrichtung eine Vorwähleinrichtung auf, über welche die akustischen Signale aus einer Vielzahl von Signalen und Geräuschen vorgewählt werden können. Diese Signale und Geräusche sind in der Vorrichtung eingespeichert und können vom Fahrer über Eingabemittel vorgewählt und eingestellt werden. Unter Umständen ist die Signalwirkung und die Anpassung der Geräusche an den Fahrer aber immer noch nicht optimal.

Demgemäß liegt der Erfindung die Aufgabe zugrunde, ein Abstandswarngerät für Kraftfahrzeuge sowie ein entsprechendes Betriebsverfahren derart weiterzuentwickeln, dass die Signalwirkung erhöht wird und vor allem an die Bedürfnisse des Benutzers angepasst ist.

Diese Aufgabe wird mit einem Abstandswarngerät gelöst, das die Merkmale des Anspruchs 1 aufweist.

Dadurch hat der Benutzer die Möglichkeit, sich dasjenige akustische Warnsignal auszusuchen, das für ihn die größtmögliche Signalwirkung hat. Statt herkömmlicher Signaltöne können auch benutzerdefinierte Melodien oder Sprache in der Speichervorrichtung abgelegt werden.

Durch die Eingabevorrichtung zur Eingabe benutzerdefinierter Warnsignale in die Speichervorrichtung kann der Benutzer beispielsweise eine gewünschte Tonfolge über die Eingabevorrichtung in der Speichervorrichtung ablegen.

Eine vorteilhafte Ausgestaltung der Erfindung ist dadurch gekennzeichnet, dass die Speichervorrichtung in dem akustischen Warnelement vorgesehen ist. Diese Anordnung hat den Vorteil, dass das elektronische Steuergerät selbst nicht verändert werden muss. Es kann also ein herkömmliches elektronisches Steuergerät für Abstandswarngeräte verwendet werden, das dem angeschlossenen Warnelement die Aktivierung des Warnsignals signalisiert. Das Warnelement entnimmt das vom Benutzer durch die Betätigungsvorrichtung gewählte Warnsignal bei Signalisierung durch das Steuergerät direkt aus der in ihm befindlichen Speichervorrichtung.

Eine weitere vorteilhafte Ausführungsform der Erfindung sieht vor, dass die Eingabevorrichtung in der Betätigungsvorrichtung angeordnet ist. Diese Ausführungsform hat den Vorteil, dass eine Mehrfachnutzung der zur Betätigung der Eingabevorrichtung sowie der Betätigungsvorrichtung erforderlichen Bedienelemente wie z.B. Tasten oder optischen Anzeigen möglich ist.

Ausserdem ist es denkbar, dass die Speichervorrichtung Halbleiterspeicher wie z.B. EEPROM-Speicherbausteine zur Speicherung der Warnsignale umfasst, die in einer weiteren Variante auch vom Benutzer austauschbar sein können.

Eine weitere, besonders vorteilhafte Ausgestaltung der Erfindung sieht vor, dass die Eingabevorrichtung ein Mikrofon beinhaltet. Damit kann der Benutzer eigene Sprachmitteilungen als Warnsignal aufzeichnen.

Die Anpassung der Lautstärke der akustischen Warnsignale wird durch eine andere sehr vorteilhafte Ausführungsform des erfindungsgemäßen Abstandswarngeräts ermöglicht, die in der Betätigungsvorrichtung ein Bedienelement zur Einstellung der Lautstärke des akustischen Warnsignals aufweist.

Eine sehr benutzerfreundliche Variante der Erfindung sieht vor, dass die Lautstärke des akustischen Warnsignals automatisch durch das elektronische Steuergerät in Abhängigkeit eines gemessenen Geräuschpegels einstellbar ist. Sehr vorteilhaft kann die Messung des Geräuschpegels dabei über ein in der Eingabevorrichtung befindliches Mikrofon erfolgen.

Als eine weitere Lösung der Aufgabe der vorliegenden Erfindung wird ausgehend vom eingangs erwähnten Verfahren zum Betrieb eines Abstandswarngeräts für Kraftfahrzeuge mit akustischem Warnsignal vorgeschlagen, dass der Benutzer benutzerdefinierte Warnsignale in der Speichervorrichtung abspeichert.

Eine Variante des vorgeschlagenen Verfahrens ist dadurch gekennzeichnet, dass die Lautstärke des akustischen Warnsignals automatisch durch ein elektronisches Steuergerät in Abhängigkeit eines gemessenen Geräuschpegels eingestellt wird.

Weitere Merkmale der Erfindung können den Unteransprüchen sowie der nachfolgenden Figurenbeschreibung entnommen werden. Dabei zeigen:
- Fig. 1: eine schematische Ansicht eines Teils einer ersten Ausführungsform des erfindungsgemäßen Abstandswarngeräts, und
- Fig 2: eine schematische Ansicht eines Teils einer zweiten Ausführungsform des erfindungsgemäßen Abstandswarngeräts.

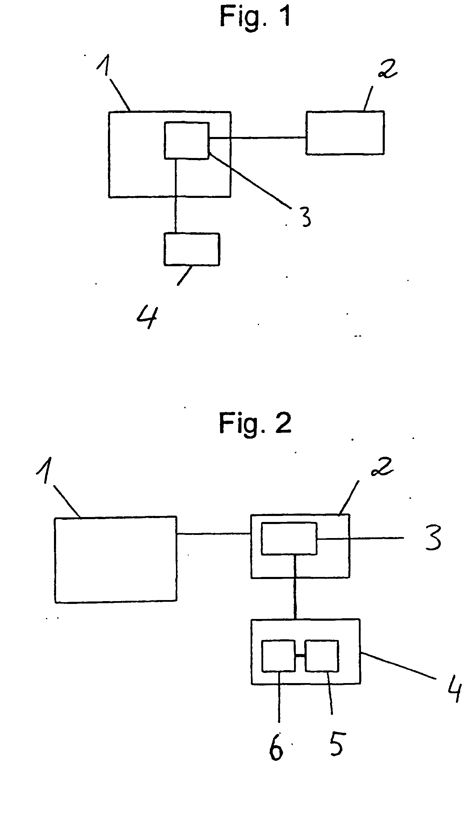

Fig. 1 zeigt einen Teil einer ersten Ausführungsform des erfindungsgemäßen Abstandswarngeräts, der aus einem elektronischen Steuergerät 1, einer darin befindlichen Speichervorrichtung 3 sowie einem akustischen Warnelement 2 und einer Betätigungsvorrichtung 4 besteht. Das Warnelement 2 ist mit der Speichervorrichtung 3 verbunden, so dass darin abgelegte Warnsignale durch das Warnelement 2 ausgegeben werden können. Die Auswahl des auszugebenden Warnsignals aus der in der Speichervorrichtung 3 abgelegten Vielzahl von Warnsignalen nimmt der Benutzer mit Hilfe der Betätigungsvorrichtung 4 vor.

Fig. 2 zeigt schematisch einen Teil einer zweiten Ausführungsform des erfindungsgemäßen Abstandswarngeräts. Bei dieser Ausführungsform befindet sich die Speichervorrichtung 3 direkt innerhalb des Warnelements 2, das mit dem elektronischen Steuergerät 1 des Abstandswarngeräts verbunden ist. Die Betätigungsvorrichtung 4 weist ein Bedienelement 6 zur Einstellung der Lautstärke des akustischen Warnsignals auf. Weiterhin weist die Betätigungsvorrichtung 4 ein Mikrofon 5 auf.

Neben der Auswahl des zu verwendenden Warnsignals durch die Betätigungsvorrichtung 4 kann der Benutzer mit dem Bedienelement 6 auch die Lautstärke des Warnsignals bestimmen. Eine automatische Anpassung der Lautstärke des Warnsignals an den Geräuschpegel im Fahrzeuginneren ist ebenfalls möglich. Dazu erfasst das Mikrofon 5 diesen Geräuschpegel und leitet eine entsprechende Stellinformation an das Bedienelement 6 zur Einstellung der Lautstärke des Warnsignals weiter.

Darüberhinaus kann der Benutzer mit der in der Betätigungsvorrichtung 4 integrierten Eingabevorrichtung (nicht gezeigt) Sprache oder Geräusche mit dem Mikrofon 5 aufnehmen und in der Speichervorrichtung 3 ablegen. Die auf diese Weise gespeicherten Töne können mittels Betätigungsvorrichtung 4 zur Ausgabe als Warnsignal über das Warnelement 2 ausgewählt werden.

## Patentansprüche

1. Abstandswarngerät für Kraftfahrzeuge, mit Mitteln zur Detektion von Hindernissen, Bestimmung des Abstandes zwischen Fahrzeug und Hindernis und Ausgabe eines akustischen Warnsignals in Abhängigkeit von diesem Abstand, mit einem elektronischen Steuergerät (1) und einem akustischen Warnelement (2) zur Ausgabe von Warnsignalen, **dadurch gekennzeichnet, dass** eine Speichervorrichtung (3) zur Speicherung mehrerer Warnsignale in dem elektronischen Steuergerät (1) vorgesehen ist, dass die in der Speichervorrichtung (3) gespeicherten Warnsignale durch das akustische Warnelement (2) ausgebbar sind, dass eine Betätigungsvorrichtung (4) vorgesehen ist, die dem Benutzer erlaubt, eines der in der Speichervorrichtung (3) gespeicherten Warnsignale auszuwählen und dass eine Eingabevorrichtung zur Eingabe und Ablage benutzerdefinierter Warnsignale vorgesehen ist.

2. Abstandswarngerät nach Anspruch 1, **dadurch gekennzeichnet, dass** die Speichervorrichtung (3) in dem akustischen Warnelement (2) vorgesehen ist.

3. Abstandswarngerät nach einem der vorstehenden Ansprüche, **dadurch gekennzeichnet**, die Eingabevorrichtung in der Betätigungsvorrichtung (4) vorgesehen ist.

4. Abstandswarngerät nach einem der vorstehenden Ansprüche, **dadurch gekennzeichnet, dass** die Eingabevorrichtung ein Mikrofon (5) beinhaltet.

5. Abstandswarngerät nach einem der vorstehenden Ansprüche, **dadurch gekennzeichnet, dass** die Betätigungsvorrichtung (4) ein Bedienelement (6) zur Einstellung der Lautstärke des akustischen Warnsignals aufweist.

6. Abstandswarngerät nach einem der vorstehenden Ansprüche, **dadurch gekennzeichnet, dass** die Lautstärke des akustischen Warnsignals automatisch durch das elektronische Steuergerät (1) in Abhängigkeit eines gemessenen Geräuschpegels einstellbar ist.

7. Abstandswarngerät nach einem der vorstehenden Ansprüche, **dadurch gekennzeichnet, dass** die Speichervorrichtung (3) EEPROM-Speicherbausteine zur Speicherung der Warnsignale umfasst.

8. Abstandswarngerät nach Anspruch 7, **dadurch gekennzeichnet, dass** die Speichervorrichtung (3) vom Benutzer austauschbare Speichermittel zur Speicherung der Warnsignale umfasst.

9. Verfahren zum Betrieb eines Abstandswarngeräts für Kraftfahrzeuge mit akustischem Warnsignal nach einem der vorstehenden Ansprüche, **dadurch gekennzeichnet, dass** der Benutzer benutzerdefinierte Warnsignale in der Speichervorrichtung (3) abspeichert.

10. Verfahren nach Anspruch 9, **dadurch gekennzeichnet, dass** die Lautstärke des akustischen Warnsignals automatisch durch ein elektronisches Steuergerät (1) in Abhängigkeit eines gemessenen Geräuschpegels eingestellt wird.

## Claims

1. Distance warning device for motor vehicles, having means for detecting obstacles, for determining the distance between the vehicle and an obstacle, and for emitting an acoustic warning signal as a function of said distance, and having an electronic control unit (1) and an acoustic warning element (2) for emitting warning signals, **characterised in that** a memory device (3) for storing a plurality of warning signals is provided in the electronic control unit (1), **in that** the warning signals stored in the memory device (3) can be emitted by the acoustic warning element (2), **in that** an actuating device (4) is provided which allows the user to select one of the warning signals stored in the memory device (3), and **in that** an input device is provided for the input and placing in store of user-defined warning signals.

2. Distance warning device according to claim 1, **characterised in that** the memory device (3) is provided in the acoustic warning element (2).

3. Distance warning device according to either of the foregoing claims, **characterised in that** the input device is provided in the actuating device (4).

4. Distance warning device according to one of the foregoing claims, **characterised in that** the input device includes a microphone (5).

5. Distance warning device according to one of the foregoing claims, **characterised in that** the actuating device (4) has a control (6) for setting the volume of the acoustic warning signal.

6. Distance warning device according to one of the foregoing claims, **characterised in that** the volume of the acoustic warning signal can be set automatically by the electronic control unit (1) as a function of a measured noise level.

7. Distance warning device according to one of the foregoing claims, **characterised in that** the memory device (3) comprises EEPROM memory modules for storing the warning signals.

8. Distance warning device according to claim 7, **characterised in that** the memory device (3) comprises memory means able to be replaced by the user for storing the warning signals.

9. Method of operating a distance warning device for motor vehicles employing an acoustic warning signal, said distance warning device being according to one of the foregoing claims, **characterised in that** the user stores user-defined warning signals in the memory device (3).

10. Method according to claim 9, **characterised in that** the volume of the acoustic warning signal is set automatically by an electronic control unit (1) as a function of a measured noise level.

## Revendications

1. Avertisseur d'espacement pour véhicules, avec des moyens pour la détection d'obstacles, pour la détermination de l'espacement entre le véhicule et l'obstacle et l'émission d'un signal d'avertissement acoustique en fonction de cet espacement, avec un appareil de commande électronique (1) et un élément d'avertissement acoustique (2) pour l'émission de signaux d'avertissement, **caractérisé en ce qu'**il est prévu un dispositif de mémorisation (3) pour mémoriser plusieurs signaux d'avertissement dans l'appareil de commande électronique (1), **en ce que** les signaux d'avertissement mémorisés dans le dispositif de mémorisation (3) peuvent être émis par l'élément d'avertissement acoustique (2), **en ce qu'**il est prévu un dispositif d'actionnement (4) qui permet à l'utilisateur de sélectionner l'un des signaux d'avertissement mémorisés dans le dispositif de mémorisation (3) et **en ce qu'**il est prévu un dispositif d'entrée pour l'entrée et le dépôt de signaux d'avertissement définis par l'utilisateur.

2. Avertisseur d'espacement selon la revendication 1, **caractérisé en ce que** le dispositif de mémorisation (3) est prévu dans l'élément d'avertissement acoustique (2).

3. Avertisseur d'espacement selon l'une quelconque des revendications précédentes, **caractérisé en ce que** le dispositif d'entrée est prévu dans le dispositif d'actionnement (4).

4. Avertisseur d'espacement selon l'une quelconque des revendications précédentes, **caractérisé en ce que** le dispositif d'entrée comprend un microphone (5).

5. Avertisseur d'espacement selon l'une quelconque des revendications précédentes, **caractérisé en ce que** le dispositif d'actionnement (4) comprend un élément de commande (6) pour le réglage de l'intensité sonore du signal d'avertissement acoustique.

6. Avertisseur d'espacement selon l'une quelconque des revendications précédentes, **caractérisé en ce que** l'intensité sonore du signal d'avertissement acoustique peut être réglée automatiquement à l'aide de l'appareil de commande électronique (1) en fonction d'un niveau sonore mesuré.

7. Avertisseur d'espacement selon l'une quelconque des revendications précédentes, **caractérisé en ce que** le dispositif de mémorisation (3) comprend des modules de mémoire EPROM pour la mémorisation des signaux d'avertissement.

8. Avertisseur d'espacement selon la revendication 7, **caractérisé en ce que** le dispositif de mémorisation (3) comprend des moyens de mémoire remplaçables par l'utilisateur pour la mémorisation des signaux d'avertissement.

9. Procédé destiné à faire fonctionner un avertisseur d'espacement pour véhicules avec signal d'avertissement acoustique selon l'une quelconque des revendications précédentes, **caractérisé en ce que** l'utilisateur mémorise des signaux d'avertissement définis par l'utilisateur dans le dispositif de mémorisation (3).

10. Procédé selon la revendication 9, **caractérisé en ce que** l'intensité sonore du signal d'avertissement acoustique est réglée automatiquement à l'aide d'un appareil de commande électronique (1) en fonction d'un niveau sonore mesuré.
